# EUROPEAN PATENT SPECIFICATION

(11) **EP 2 134 531 B1**
(45) Date of publication and mention of the grant of the patent: **16.10.2013**
(21) Application number: 08748979.5
(22) Date of filing: 17.04.2008
(51) Int. Cl.: B29C 70/04, B29C 70/34, B29C 70/54, B29C 53/56, B29C 53/50, B29B 11/16, B29C 69/00, B29L 31/48, B29L 31/34, F41H 1/08, H01Q 1/42, B29C 47/00, B29C 53/80, B29K 105/06

(54) **METHOD OF PRODUCING A CURVED PRODUCT COMPRISING DRAWN POLYMER REINFORCING ELEMENTS AND PRODUCT OBTAINED THEREBY**
VERFAHREN ZUR HERSTELLUNG EINES GEKRÜMMTEN PRODUKTS MIT VERSTÄRKUNGSELEMENTEN AUS GEZOGENEM POLYMER UND DARAUS GEWONNENES PRODUKT
PROCÉDÉ DE PRODUCTION D'UN PRODUIT INCURVÉ COMPRENANT DES ÉLÉMENTS DE RENFORCEMENT EN POLYMÈRE ÉTIRÉ ET PRODUIT OBTENU PAR CELUI-CI

(30) Priority: 18.04.2007 EP 07007850; 02.04.2008 EP 08006711
(43) Date of publication of application: 23.12.2009
(73) Proprietor: DSM IP Assets B.V., 6411 TE Heerlen (NL)
(72) Inventor: MARISSEN, Roelof, NL-6121 HS Born (NL); VAN DEN AKKER, Lucas, NL-5262 RM Vught (NL); KOUSSIOS, Sotiris, NL-2624 CP Delft (NL); HOEFNAGELS, Hen, NL-6336 XE Hulsberg (NL)
(74) Representative: Morariu Radu, Mihai Dorin
(86) International application number: PCT/EP2008/003119
(87) International publication number: WO 2008/128715

(56) References cited:
- GB-A- 2 158 471
- US-A- 3 623 928
- US-A- 4 010 054
- US-A- 4 613 535
- US-A- 5 204 033

## Description

The invention relates to a process for manufacturing a curved product, comprising drawn polymer reinforcing elements. The invention also relates to a process for making a curved armour article. The invention further relates to a helmet, preferably a combat helmet, and to a radome obtained by the process.

Curved articles, and in particular curved armour articles, are generally made of composites of high strength fibers embedded in a polymer matrix. Such armour articles combine good high-speed projectile ballistic protection with low mass. To ensure the required high quality of the armour articles, fiber-polymer armour prepregs have been developed in particular for anti-ballistic performance. An example of a particularly suitable armour prepreg includes Dyneema®HB25 from DSM. To form an armour article, such prepregs are stacked and compressed at elevated temperature and pressure.

It has been proposed in WO 2005/065910 to manufacture curved articles from a relatively flat package of stacked plies of polymeric fibers by deforming the stack into its three-dimensional shape at elevated temperature. It is suggested in WO 2005/065910 to solve the problem of wrinkling of plies when deforming a flat stack into a three-dimensionally shaped article by imposing a tensile stress on the fibers at a temperature high enough for the fibers to be drawn.

Although the known process yields suitable curved articles, their performance, and in particular their anti-ballistic performance can be further improved.

The object of the present invention is to provide a process for manufacturing a curved product without substantial wrinkling. Another object is to provide a process for manufacturing a curved armour article with at least similar anti-ballistic properties as the curved article described in WO 2005/065910.

This object is achieved according to the invention by a process according to claim 1. The process of the invention provides a curved product that is substantially form stable, due to the local adherence of the reinforcing elements, without however having to embed the majority of the reinforcing elements in a polymer matrix. With majority of the reinforcing elements is meant at least 80% of the total amount of reinforcingelements, preferably at least 90% of the total amount of reinforcing elements, more preferably at least 95% of the total amount of reinforcing elements. The curved product may be used to advantage as an intermediate product, also referred to as a preform according to claim 9, to manufacture a curved armour article. According to the invention such a process for manufacturing a curved armour article comprises positioning the curved preform in a mould and compressing said preform at an elevated temperature and pressure according to claim 11. In the process, the curved preform substantially has the curved shape required in the final end article, prior to compressing. This largely prevents wrinkles from occurring, which is beneficial for the (anti-ballistic) properties of the curved article.

The invented process allows products and articles, curved in one or more directions, to be produced from reinforcing elements directly without appreciable wrinkling. With a curved product is meant in the context of this application, a product which, when positioned on a flat surface, has a ratio of maximum elevation with respect to said surface to the largest linear dimension within the projected surface of the product on the flat surface of at least 0.20. With a highly curved product is meant in the context of this application a product which, when positioned on a flat surface has a ratio of maximum elevation with respect to said surface to the largest linear dimension within the projected surface of the product on the flat surface of at least 1.00. By positioning a plurality of drawn polymeric reinforcing elements onto a mandrel in the shape required by the final product, the reinforcement elements are built up into a preform, which preform does not need to be deformed to a large extent during compressing thereof. It becomes even possible to built up the preform with low internal deformability. By positioning the reinforcement elements in the required shape prior to compressing, deformability of the preform is no longer a limiting factor and virtually any shape can be obtained.

According to the invention a plurality of drawn polymeric reinforcing elements is positioned onto a mandrel. A suitable process comprises winding the reinforcing elements onto a preferably rotating mandrel. Curved and highly curved three-dimensional articles like helmets may hereby be obtained by direct placement of reinforcing elements, and in particular by filament winding. Filament winding itself is known per se. GB2158471 for instance decribes a method for making armour articles, wherein fibers, impregnated with a conventional thermosetting resin are positioned according to a pattern onto a mandrel using winding techniques. In contrast to the method disclosed in GB2158471, the process according to the invention does not need the presence of a polymer matrix. It has never been reported that curved articles, such as armour articles, and helmets in particular, may be obtained by positioning reinforcing elements onto a mandrel substantially free from polymer matrix. Surprisingly, the quality of the filament wound curved armour article according to the invention is superior despite the fact that the article is made from reinforcement elements, substantially free from polymer matrix, instead of from the optimized armour prepregs known in the art, which use a polymer matrix to embed the reinforcing elements. Moreover filament wound articles generally comprise various locations having more than two fiber directions. This is normally disadvantageous for the ballistic performance thereof. This does not apply to the curved armour article of the present invention, due to the fact that the preform and article are substantially free from polymer matrix.

A further advantage of the process according to the invention is that the reinforcing elements may be oriented in any desired directions across the surface of the mandrel, whereby a wrinkle-free object with more homogeneous properties may be obtained.

The process according to the invention is particularly useful for the manufacture of articles, curved in one or more directions. Examples thereof include radomes, helmets, ballistic protection panels for shoulders or other means of protection for, for instance, soldiers and armour panels for automobiles or for military helicopters.

The invention in particular also relates to a radome, obtained by the process of the invention. The invention further relates to a radome for enclosing and protecting a radar antenna, particularly the type carried by aircrafts, said radome comprising the article of the invention. By radome is herein understood any structure used to protect electromagnetic radiation equipment, e.g. radar equipment, for e.g. aircraft, ground or ship based. In case that the radome is aircraft based, the radome can be shaped and positioned as the nose of the aircraft, a portion of the wing or fuselage or the tail of the aircraft. The advantage of the radome of the invention is that is has an improved distribution of stiffness while having also an improved E-field distribution.

A further important advantage of the inventive radome is that said radome has a lighter weight, especially when gel spun fibers of ultrahigh molecular weight polyethylene are used thereof, than known radomes with similar constructions while having improved structural and electromagnetic functions. It was surprisingly discovered that the inventive radome it is not tuned to a narrow frequency band as compared to known radomes. Yet a further important advantage of the inventive radome is that it has an increased resistance against projectiles, e.g. in case of military aircrafts, as well as against bird strikes, hail and the like.

Local adhering of reinforcing elements to each other may be accomplished in a number of ways. With locally adhering is meant that at most 20% of the reinforcing elements are adhered to each other in any direction, i.e. across the surface of the curved preform or over the thickness thereof.

According to the invention, the step of locally adhering at least part of the reinforcing elements to each other is done by locally bringing the drawn polymeric reinforcing elements to above their melting temperature and fusing them together. Bringing the reinforcing elements to above their melting or softening temperature and fusing them together may for instance be accomplished by local heating means such as IR sources, heated cutting elements and the like.

In still another embodiment of the process, the process further comprises providing the curved product with a polymer film layer, which layer has a lower melting point than the reinforcing elements. Such a polymer film layer further stabilizes the curved preform. The polymer film layer may extend over part of the preforms surface, or alternatively over substantially the entire surface of the preform, including its inner, outer and side surfaces.

In still another preferred embodiment of the process, the process further comprises enclosing the curved preform in a polymer film envelope, to which a vacuum is applied. Preferably the polymer film envelope is in virtually full contact with the surfaces of the preform, prior to applying the vacuum inside the envelope. This prevents the preform from deforming or even collapsing when applying the vacuum pressure. Such an embodiment of the process maintains the quality during transport of the preform product and increases its coherence. Moreover, when the curved preform product is used to manufacture a curved article by compressing it in a mould at an elevated temperature and pressure, the polymer film envelope does not need to be removed. Instead it may at least partly melt and form an integral part of the compression moulded armour article, or be wasted.

Reinforcing elements may comprise drawn polymer films and/or fibers. Such drawn polymer films are preferably slitted to form tapes. Films may be prepared by feeding a polymeric powder between a combination of endless belts, compression-moulding the polymeric powder at a temperature below the melting point thereof and rolling the resultant compression-moulded polymer thereby forming a film. Another preferred process for the formation of films comprises feeding a polymer to an extruder, extruding a film at a temperature above the melting point thereof and drawing the extruded polymer film. If desired, prior to feeding the polymer to the extruder, the polymer may be mixed with a suitable liquid organic compound, for instance to form a gel, such as is preferably the case when using ultra high molecular weight polyethylene. Drawing, preferably uniaxial drawing, of the films to produce tapes may be carried out by means known in the art. Such means comprise extrusion stretching and tensile stretching on suitable drawing units. To attain increased mechanical strength and stiffness, drawing may be carried out in multiple steps. The resulting drawn tapes may be used as such for filament winding the curved preform product, or they may be cut to their desired width, or split along the direction of drawing. The width of suitable unidirectional tapes usually depends on the width of the film from which they are produced. In the product and method according to the invention, the width of the tapes preferably is at least 3 mm, more preferably at least 5 mm. The width of the tapes preferably is less than 30 mm, more preferably less than 15 mm, and most preferably less than 10 mm, to further prevent wrinkling during the winding process. The areal density of the tapes can be varied over a large range, for instance between 5 and 200 g/m². Preferred areal density is between 10 and 120 g/m², more preferred between 15 and 80 g/m² and most preferred between 20 and 60 g/m².

Various forms of fiber can be employed in the process according to the invention. "Fiber" includes a body whose length is far greater than the transverse dimensions, and comprises a monofilament, a multifilament yarn, a strip, ribbon or tape and the like. Suitable fibres include multifilament yarns, the thickness and number of filaments not being critical. Suitable yarns have a titer of for example 100 to 4000 dtex. The filament thickness from which the yarns are made may vary from for example 1 to 20 dpf. It is also possible to use a yarn spun from short filaments or staple fibers. Preferably, however, multifilament yarns are used.

Suitable polymeric reinforcing elements, such as fibers and tapes are prepared from a polymeric material whose macromolecules exhibit a certain degree of chain slip at a temperature below the melting point, i.e. in the solid phase, under the influence of an imposed stress. Examples hereof include various polyolefins, such as for Example polyethylene, polypropylene, and copolymers thereof, optionally with other monomers, polyvinyl alcohol, and polyamides and polyesters, especially polyamides and polyester that contain at least one aliphatic monomeric unit. Preferably, a polyolefin, and in particular a polyethylene is applied. A polyethylene fiber or tape is preferably made from a linear polyethylene, i.e. a polyethylene with less than 1 side chain, containing at least 10 carbon atoms per 100 C atoms, more preferably less than 1 side chain per 300 C atoms.

The reinforcing elements preferably have a tensile strength of at least 1.6 GPa, more preferably at least 1.8 GPa, and most preferably at least 2 GPa, and a tensile modulus of at least 50 GPa. More preferably, the tensile strength is at least 2.5 and even 3 GPa and the modulus at least 70 and even 90 GPa. The tensile properties of the reinforcing elements are determined by a method as specified in ASTM D885M. The use of reinforcing elements with such a high modulus and tensile strength allows objects to be manufactured with good flexural stiffness and ballistic properties and high resistance to extraneous forces, such as helmets.

Particularly preferred fibers to be used in the process according to the invention comprise fibers prepared from ultra-high molecular weight polyethylene (UHPE). UHPE is understood to be a preferably linear polyethylene with an intrinsic viscosity (IV, as determined on solutions in decalin at 135°C) of at least 4 dl/g, preferably at least 8 dl/g. The preparation and properties of these fibers are described in numerous publications including GB 204214 A and WO 01/73171 A1 and such fibers are commercially available, for instance with the trade name Dyneema® of DSM (NL).

The reinforcing elements may also comprise a combination of different fibers and/or tapes, in addition to the reinforcing elements already mentioned above. By combining different fibers and/or tapes the anti-ballistic performance of the article can be even better adjusted to the expected ballistic threat. Other fibers and/or tapes to be suitably applied in the product according to the invention include glass fibers, aramid fibers, carbon fibers, as well as other drawn thermoplastic polymer fibers, comprising poly(p-phenylene-2, 6-benzobisoxazole) fibers (PBO, Zylon®), and poly(2,6-diimidazo-(4,5b-4',5'e)pyridinylene-1,4(2,5-dihydroxy)phenylene) fibers (better known as M5® fibers).

According to the process of the invention, a curved product is made by positioning a plurality of reinforcing elements, such as fibers or tapes onto a mandrel. The process preferably comprises unwinding bobbins of reinforcing elements under tension. In a preferred embodiment the curved product is manufactured by simultaneously positioning a plurality of reinforcing elements such as fiber bundles onto the mandrel using supply means during the filament winding process. Suitable supply means comprise a creel provided with bobbins, and eventually guiding means, for instance in the form of dispensing tubes, to guide the reinforcement elements over the surface of the mandrel. This measure allows for filament winding with reduced production times, while keeping the device simple. It is especially advantageous in case of producing large series of products. A plurality of reinforcing elements is preferably comprised between 10 and 60 reinforcing elements, and more preferably between 24 and 48. A compromise between manageability and production time is hereby obtained.

During the filament winding process the supply means preferably move relative to the mandrel. In still another preferred embodiment the supply means adjust the length of a reinforcing element spanning the distance between the mandrel surface and the supply means. This measure leads to a more constant tension on the reinforcing elements and therefore to a product with better quality. Adjusting the free length of the reinforcing elements between supply means and mandrel surface may for instance be carried out by providing supply means in the form of fiber dispensing tubes, provided with electro motors that act on the fiber bobbins. According to a preferred embodiment the supply means control the tension of a reinforcing element between the mandrel surface and the supply means. Control of the tension in the reinforcing elements is favorable for the mechanical properties of the product or article, and in particular for its stiffness and strength.

Filament winding patterns are preferably restricted to "about geodetic patterns", although this is not necessary for the invention. A winding trajectory is geodetic when it spans the shortest distance between two points on the curved surface of the product. The design of winding patterns requires special care regarding the choice of a pattern that fulfils the "about geodetic pattern" and prevents local accumulation of fibers at certain locations. Optimal curved products are preferably wound in such a way that local accumulations are sufficiently "diluted" or spread over the product surface. Modern software, known per se, allows filament winding specialists to design winding patterns with sufficient "dilution" of local fiber accumulations. Also, trial and error methods may be employed to obtain adequate winding patterns.

In a preferred embodiment the curved product is produced by filament winding reinforcing elements onto a mandrel with polar surfaces, which mandrel rotates around a central shaft, the polar surfaces being that part of the mandrel where the central shaft enters or exits. Reinforcing elements are positioned onto such a mandrel substantially over its surface and its polar surfaces. In this way a substantially closed product is obtained which is subsequently partitioned in two halves, thus producing two similar curved products in one time. Due to the presence of the shaft during winding, the apex of the curved products will generally have an opening when the shaft is removed after the winding process. Such an opening, if present after winding and/or pressing, may for instance be closed by inserting in it a fitting plug. This process may be further enhanced by adopting a non-geodetic pattern on the polar surfaces. Because of the presence of the shaft, the reinforcing elements may be wound around this shaft under tension and in a non-geodetic pattern (in the end article). When removing the shaft, the non-geodetic reinforcing elements under tension reposition from their non-geodetic pattern to a pattern that is closer to a geodetic pattern, thereby reducing the opening and/or clamping, and thereby better fixing the plug.

The curved product is readily removed from the mandrel without there being any need to dry and/or cure any polymer matrix, and can therefore be readily finished by edge trimming for instance, e.g. by using the heated cutting device that was mentioned earlier.

The invention also relates to a process for manufacturing a curved article, the process comprising positioning a curved preform obtained by a process according to the invention in a mould and compressing said preform at an elevated temperature and pressure. Since the curved preform has substantially the shape of the curved article, the step of compressing said preform at an elevated temperature and pressure does not appreciably cause any wrinkles or other distortions in the produced article, preferably the produced armour article. This improves the anti-ballistic properties of the armour article. Since the curved product of the invention does not need the presence of a polymer matrix, an armour article with a low amount or no polymer matrix at all can be obtained which also benefits the anti-ballistic properties of the armour article.

According to the invention the filament wound curved preform contains reinforcement elements, in particular fibers, only. In the process of manufacturing a curved armour article according to the invention, the reinforcing elements by a combination of elevated temperature, pressure and time, partly soften and fuse, also known as sintering, at the surface. Since the reinforcement elements were already positioned in their desired number and direction in the filament wound curved preform, this product is given the desired properties and shape by only slightly deforming it at elevated temperature and pressure in a mould. Such deformation may be effected using suitable techniques known per se such as forming with the aid of a heated die and mould. Prior to compression moulding the intermediate product may be brought to a temperature, for example in an oven, which is preferably below the melting point of the reinforcing elements. Preferably, this temperature is about equal to the temperature of the mould. Preferably also, an envelope is used to which vacuum is applied, as described above.

In the process of manufacturing a curved article from a filament wound preform by compression moulding, the person skilled in the art will generally be able to choose a suitable combination of elevated temperature, pressure as well as time to adequately consolidate the product. The desired shaping will generally take place in about 1 to 60 minutes, preferably about 5 to 45 minutes, for a preform containing fibers made of ultra-high molecular polyethylene. Elevated pressures applied to the preform in producing a curved article, such as an armour article or radome, may vary widely, but are preferably higher than about 7 MPa, more preferably higher than about 10 MPa, even more preferably higher than about 15 MPa, a higher pressure yielding the better results. Due to the applied elevated pressure, the reinforcement elements are substantially kept tensioned, thus preventing the good mechanical properties from being lost or significantly diminished as a result of molecular relaxation. The elevated temperature is preferably selected between 80°C and 40°C below the melting or softening temperature of the reinforcing elements, and more preferably between 80°C and 20°C below the melting or softening temperature of the reinforcing elements, which range for most practical applications is between 80°C and 145°C. After forming at elevated temperature and pressure, the curved article is preferably cooled until the article has reached a temperature lower than about 80°C, in order to avoid any undesired relaxation processes in the reinforcing elements.

The number of reinforcing elements positioned on the mandrel during filament winding may be varied and is generally such that the desired thickness is reached. In the process according to the invention, many different winding patterns for the reinforcing elements are in principle possible. The process according to the invention allows producing preforms and end articles having a wide variety of wall thicknesses without substantial wrinkling, which is beneficial for anti-ballistic performance. The winding process is preferably carried out such that the produced article has a constant thickness over substantially its entire surface. From a standpoint of antiballistic performance, the wall thickness of the article according to the invention is preferably above 3 mm, more preferably above 5 mm, even more preferably above 9 mm, and most preferably above 12 mm.

In a preferred embodiment of the product according to the invention the mandrel used in producing the product by the filament winding process is a similar product but made with another technology. More in particular, a conventional helmet with a thin shell is used as a mould for filament winding. In this way, only the outer part of the helmet consists of filament wound material. The advantage is that a thin helmet is more easily produced with conventional technology than a thick helmet, yet the advantage of filament winding is present to a large extent. Moreover, adaptation of the helmet to heavier threats is easy, just by applying additional windings.

The present invention will now be further elucidated by the following example and comparative experiment, without however being limited thereto.

### Example I

Antiballistic Dyneema® UHMWPE fibers of type SK76 1760 dtex were wound onto a cone-shaped mandrel, fixed by a shaft having a diameter of 20 mm. The fibers were held under tension during winding. The last windings of the UHWMPE fibers were lightly sprayed with 0.1 % by weight with respect to the total weight of the fibers of an adhesive binder to partly adhere these to each other. The wound product was partitioned in two halves using a hot knife and then removed from the mandrel, thereby obtaining two similar preforms in the shape of a combat helmet, each weighing 1140 grams. An opening with a diameter of about 20 mm was present at the apex after removal of the shaft. Both preforms were then enclosed in a tightly fitting polyethylene film envelope, to which a vacuum was applied. The preforms with envelope were then placed between the two mould halves of a compression moulding press, leaving a free space in the closed position between the two mould halves of 7 mm. The mould halves were heated to an elevated temperature of 140°C. An elevated pressure of 165bar was applied to the preforms for a period of about 60 minutes. After cooling to 80°C under pressure, the compression moulded helmet was removed from the mould halves and underwent edge finishing. The final weight of the helmet was 0.98 kg and the diameter of the cranial opening was during compression moulding decreased to 10 mm. The opening was closed by inserting a fitting plug.

### Comparative Experiment A

A flat stack of 38 plies of Dyneema® HB25 sheets were compression moulded between two mould halves at a temperature of 140°C, and an elevated pressure of 165bar for a period of about 60 minutes. During compression moulding the flat stack was deformed into a three-dimensionally shaped helmet. After cooling to 80°C under pressure the helmet was removed from the mould halves and underwent edge finishing.

### Results

The characteristics of the helmets produced according to the invention are summarized in Table 1.

**Table 1: characteristics of produced helmets**

| | Example I | Comparative Experiment A |
|---|---|---|
| Weight [kg] | 0.98 | 0.83 |
| Forming method | Compression of filament wound intermediate product | Compression moulding of flat stack |

The helmets were shot with 11 gram (17 grain) Fragment Simulating Projectiles (FSP). The obtained anti-ballistic test results V₅₀ and absorbed energy E_{abs} are given in Table 2. The helmets were also loaded by a so-called 'ear-to-ear' compression load. In such a test, a compression force is applied to the sidewalls of the helmets at the area of the ears of a wearer, whereby the total inner displacement of the sidewalls is measured. The results of this test are summarized in Table 3.

**Table 2: anti-ballistic results**

| | E_{abs} [J/kg/m²] |
|---|---|
| Example I | 41 |
| Comparative Experiment A | 31 |

**Table 3: 'ear-to-ear' compression test results**

| | Applied load [N] | Displacement [mm] |
|---|---|---|
| Example I | 1500 | 17 |
| Comparative Experiment A | 500 | > 40 |

Based on the amount of energy a helmet can absorb, a filament wound helmet according to the invention performs better than a conventionally pressed helmet. The typical value for the absorbed energy of a conventional helmet is around 30 J/kg/m². The absorbed energy of a helmet according to the invention is more than 40 J/kg/m², a performance increase of at least 30%.

As to the "ear to ear" compression test results, a filament wound helmet according to the invention performs considerably better than a conventionally pressed helmet. The measured "ear to ear" displacement is 17 mm only, whereby the conventional helmet shows a higher displacement at a lower load.

Adding to the performance increase the filament winding process in combination with the preferred absence of a polymer matrix offers other advantages, such as the absence of wrinkles in the final article, cheaper starting materials, obviating the use of expensive cross-ply prepregs, freedom of combining different materials, a low amount of waste and the opportunity for far-reaching automation.

## Claims

1. Process for manufacturing a curved product, wherein the process comprises positioning a plurality of drawn polymeric reinforcing elements, wherein at least 80% of the total amount of reinforcing elements is free from polymer matrix, onto a mandrel, locally adhering at least a part of the elements to each other, and removing the product from the mandrel and wherein the local adhering of at least part of the reinforcing elements is accomplished by bringing the reinforcing elements to above their melting or softening temperature to fuse them together, and wherein at most 20% of the reinforcing elements are adhered to each other in any direction.

2. Process according to claim 1, wherein the step of locally adhering is accomplished by local heating means chosen from the group consisting of infrared (IR) sources and heated cutting elements.

3. Process according to any one of the preceding claims, wherein the process further comprises providing the curved product with a polymer film layer, which layer has a lower melting point than the reinforcing elements.

4. Process according to any one of the preceding claims, wherein the curved product is enclosed in a polymer film envelope, in contact with the outer and/or inner surface of the product, to which envelope a vacuum is applied.

5. Process according to any one of the preceding claims, wherein the drawn polymeric reinforcing elements comprise fibers and/or films and/or tapes, having a strength of at least 1.6 GPa

6. Process according to claim 5 wherein the drawn polymeric reinforcing elements comprise fibers and/or films and/or tapes of ultrahigh molecular weight polyethylene.

7. Process according to any one of the preceding claims, wherein a plurality of reinforcing elements is simultaneously positioned onto the mandrel by supply means.

8. Process according to claim 7, wherein the supply means control the tension of a reinforcing element between the mandrel surface and the supply means.

9. Filament wound curved preform obtainable by the process of any one of the preceding claims.

10. Preform according to claim 9, wherein part of the reinforcing elements is positioned in a pattern that is at least partly non-geodetic.

11. Process for manufacturing a curved article, the process comprising positioning the filament wound curved perform of any one of claims 9 - 10 in a mould and compressing said preform at an elevated temperature and pressure.

12. Process according to claim 11, wherein the elevated pressure is higher than 7 MPa.

13. Curved article obtainable by a process according to claims 11 or 12.

14. The article of claim 13 said article being a combat helmet or a radome.

15. The article according to claim 13 or 14 having a wall thickness of at least 3 mm.

## Patentansprüche

1. Verfahren zum Herstellen eines gebogenen Produkts, wobei das Verfahren das Anordnen mehrerer abgespannter Polymerverstärkungselemente umfasst, wobei mindestens 80 % der Gesamtmenge der Verstärkungselemente frei von Polymermatrix sind, auf einem Dorn, das lokale Anhaften mindestens einen Teil der Elemente aneinander und Entfernen des Produkts von dem Dorn umfasst, wobei das lokale Anhaften von mindestens einem Teil der Verstärkungselemente erreicht wird, indem die Verstärkungselemente über ihre Schmelz- oder Erweichungstemperatur gebracht werden, um sie miteinander zu verschmelzen, und wobei mindestens 20 % der Verstärkungselemente in jeder beliebigen Richtung aneinander haften.

2. Verfahren nach Anspruch 1, wobei der Schritt des lokalen Anhaftens durch lokale Erwärmungsmittel erreicht wird, die ausgewählt sind aus der Gruppe, bestehend aus Infrarotquellen (IR-Quellen) und erwärmten Schneidelementen.

3. Verfahren nach einem der vorherigen Ansprüche, wobei das Verfahren ferner das Bereitstellen eines gebogenen Produkts mit einer Polymerfilmschicht umfasst, wobei die Schicht einen niedrigeren Schmelzpunkt aufweist als die Verstärkungselemente.

4. Verfahren nach einem der vorherigen Ansprüche, wobei das gebogene Produkt in einer Polymerfilmummantelung eingeschlossen ist, die mit der äußeren und/oder inneren Oberfläche des Produkts in Kontakt steht, wobei ein Vakuum auf die Ummantelung angewendet wird.

5. Verfahren nach einem der vorherigen Ansprüche, wobei die abgespannten Polymerverstärkungselemente Fasern und/oder Filme und/oder Klebebänder umfassen, die eine Festigkeit von mindestens 1,6 GPa aufweisen.

6. Verfahren nach Anspruch 5, wobei die abgespannten Polymerverstärkungselemente Fasern und/oder Filme und/oder Klebebänder von einem ultrahochmolekularen Polyethylen umfassen.

7. Verfahren nach einem der vorherigen Ansprüche, wobei mehrere der Verstärkungselemente gleichzeitig über Zufuhrmittel auf dem Dorn angeordnet werden.

8. Verfahren nach Anspruch 7, wobei die Zufuhrmittel die Spannung eines Verstärkungselements zwischen der Dornoberfläche und dem Zufuhrmittel steuern.

9. Fadengewickelte gebogene Vorform, die durch das Verfahren nach einem der vorherigen Ansprüche erhalten werden kann.

10. Vorform nach Anspruch 9, wobei ein Teil der Verstärkungselemente in einem Muster angeordnet ist, das mindestens teilweise nicht geodätisch ist.

11. Verfahren zum Herstellen eines gebogenen Artikels, wobei das Verfahren das Anordnen der fadengewickelten gebogenen Vorform nach einem der Ansprüche 9 bis 10 in einer Gussform und das Zusammendrücken der Vorform bei einer erhöhten Temperatur und Druck umfasst.

12. Verfahren nach Anspruch 11, wobei der erhöhte Druck höher als 7 MPa ist.

13. Gebogener Artikel, der durch ein Verfahren nach einem der Ansprüche 11 oder 12 erhalten werden kann.

14. Artikel nach Anspruch 13, wobei der Artikel ein Kampfhelm oder ein Radom ist.

15. Artikel nach Anspruch 13 oder 14 mit einer Wanddicke von mindestens 3 mm.

## Revendications

1. Procédé de fabrication d'un produit incurvé, le procédé consistant à positionner une pluralité d'éléments de renforcement polymères étirés, au moins 80 % de la totalité des éléments de renforcement étant exempts de matrice polymère, sur un mandrin, faire adhérer localement au moins une partie des éléments les uns aux autres, et retirer le produit du mandrin, l'adhésion locale d'au moins une partie des éléments de renforcement étant réalisée en amenant les éléments de renforcement à une température supérieure à leur température de fusion ou de ramollissement pour les fixer par fusion les uns aux autres, et au maximum 20 % des éléments de renforcement adhérant les uns aux autres dans quelque direction que ce soit.

2. Procédé selon la revendication 1, dans lequel l'étape d'adhésion locale est réalisée par un moyen de chauffage local choisi dans le groupe constitué de sources d'infrarouges (IR) et d'éléments de découpage chauffés.

3. Procédé selon l'une quelconque des revendications précédentes, le procédé consistant en outre à pourvoir le produit incurvé d'une couche de film polymère, laquelle couche a un point de fusion inférieur à celui des éléments de renforcement.

4. Procédé selon l'une quelconque des revendications précédentes, dans lequel le produit incurvé est enfermé dans une enveloppe constituée d'un film polymère, en contact avec la surface extérieure et/ou la surface intérieure du produit, un vide étant appliqué à ladite enveloppe.

5. Procédé selon l'une quelconque des revendications précédentes, dans lequel les éléments de renforcement polymères étirés comprennent des fibres et/ou des films et/ou des rubans, ayant une résistance d'au moins 1,6 GPa.

6. Procédé selon la revendication 5, dans lequel les éléments de renforcement polymères étirés comprennent des fibres et/ou des films et/ou des rubans constitués de polyéthylène à ultra-haute masse moléculaire.

7. Procédé selon l'une quelconque des revendications précédentes, dans lequel une pluralité d'éléments de renforcement est positionnée simultanément sur le mandrin par un moyen d'alimentation.

8. Procédé selon la revendication 7, dans lequel le moyen d'alimentation contrôle la tension d'un élément de renforcement entre la surface du mandrin et le moyen d'alimentation.

9. Préforme incurvée bobinée pouvant être obtenue par le procédé selon l'une quelconque des revendications précédentes.

10. Préforme selon la revendication 9, dans laquelle une partie des éléments de renforcement est disposée selon un motif qui est au moins en partie non géodésique.

11. Procédé de fabrication d'un article incurvé, le procédé consistant à disposer la préforme incurvée bobinée selon la revendication 9 ou la revendication 10 dans un moule et à comprimer ladite préforme à une température et à une pression élevées.

12. Procédé selon la revendication 11, dans lequel la pression élevée est supérieure à 7 MPa.

13. Article incurvé pouvant être obtenu par un procédé selon la revendication 11 ou la revendication 12.

14. Article selon la revendication 13, ledit article étant un casque de combat ou un radôme.

15. Article selon la revendication 13 ou la revendication 14, ayant une épaisseur de paroi d'au moins 3 mm.
